# EUROPÄISCHE PATENTSCHRIFT

(11) **EP 2 130 985 B1**
(45) Veröffentlichungstag und Bekanntmachung des Hinweises auf die Patenterteilung: **18.12.2013**
(21) Anmeldenummer: 09006743.0
(22) Anmeldetag: 19.05.2009
(51) Int. Cl.: E04B 1/86, E04C 2/10, E04B 9/04

(54) **Schallabsorbierende Platte**
Sound absorbing panel
Panneau absorbant acoustique

(30) Priorität: 04.06.2008 DE 102008026650
(43) Veröffentlichungstag der Anmeldung: 09.12.2009
(73) Patentinhaber: Lahnau Akustik GmbH, 35633 Lahnau (DE)
(72) Erfinder: Köhler, Jörg, 35606 Solms (DE); Bärenz, Jörg, 63546 Hammersbach (DE)
(74) Vertreter: Grimm, Ekkehard

(56) Entgegenhaltungen:
- EP-A1- 1 413 688
- EP-A2- 0 592 837
- DE-A1- 10 003 760
- DE-A1- 19 653 807
- US-A1- 2004 170 806

## Beschreibung

Die vorliegende Erfindung betrifft ein Plattenelement mit Schallebsorptionseigenschaften, das einen Kernkörper aufweist, der als Hauptkomponente ein körniges Füllmaterial umfasst, das mit einem alkalischen, mineralischen Bindemittel gebundenen ist. DE 19 653 807 A1 offenbart ein gattungsgemäßer Plattenelement.

Auf dem Bausektor werden solche Plattenelemente in vielfältiger Weise eingesetzt, um Wände und Decken zu verkleiden. Diese Plattenelemente können sehr unterschiedliche Strukturen, insbesondere der Oberflächen, aufweisen, um die Räume zu gestalten. Allerdings kommt derartigen Plattenelementen auch eine technische Funktion zu, indem sie für das Einstellen der Raumakustik eingesetzt werden. Dazu werden die Materialien und Strukturen der Platten so eingestellt, dass sie Schallabsorptionseigenschaften aufweisen.

Zunehmend spielt auch das Klimatisieren der Räume eine wesentliche Rolle. Um Räume zu kühlen, werden so genannte Kühldecken installiert. Hierzu werden oberhalb der Platten Kühlsysteme, beispielsweise mit Kühlwasser versorgte Kühlrohre, verlegt, die Kühlleistung in den Kühlraum oberhalb der Deckenplatten abgeben; kühle Luft wird dann überwiegend über Öffnungen, beispielsweise Schlitze oder Perforationslöcher, in den Raum geführt. Gerade durch die über diese Schlitze oder Perforationslöcher abgegebene Luft entstehen Luftströmungen in den Räumen, die von den Personen, die sich in dem Raum aufhalten, als unangenehme Zugluft empfunden werden können.

Plattenelemente, die Schallabsorptionseigenschaften haben, wie sie eingangs erwähnt sind, haben relativ gute Wärmeisolationseigenschaften aufgrund der Luft, die in den Hohlräume zwischen dem körnigen Füllmaterial eingeschlossen ist.

Der vorliegenden Erfindung liegt nun die Aufgabe zugrunde, ein Plattenelement mit Schallabsorptionseigenschaften zu schaffen, das darüber hinaus besonders gut auch für Kühldecken geeignet ist.

Diese Aufgabe wird durch ein Plattenelement mit Schallabsorptionseigenschaften gelöst, das einen Kernkörper aufweist, der als Hauptkomponente ein körniges Füllmaterial umfasst, das mit einem alkalischen, mineralischen Bindemittel gebundenen ist, das dadurch gekennzeichnet ist, dass der Kernkörper Grafit in einer Menge von 10 - 20 Gewichts-% bezogen auf die nasse Ausgangsmischung enthält. Durch die Einlagerung des Grafits in den Körper werden die Schallabsorptionseigenschaften des Plattenelements nicht beeinträchtigt, so dass die eigentlichen, wichtigen Funktionseigenschaften der Plattenelemente, nämlich die Absorption von Schall in Räumen, erhalten bleiben. Zusätzlich eignen sich aber diese Platten durch die Einlagerung des Grafits als Plattenelemente für Kdimadecken, da der Grafit die Wärmeleitfähigkeit der Plattenelemente wesentlich erhöht. Bei solchen Klimadecken bilden die Plattenelemente eine Begrenzung des Deckenhohlraums, durch den kühle Luft geführt wird, zu dem Raum hin. Bei alternativen Kühlsystemen sind auf die Plattenelemente unmittelbar Kühlregister aufgelegt. Aufgrund der guten Wärmeleitfähigkeit der Plattenelemente erfolgt eine unmittelbare Abgabe der Kühlleistung über die Wärmeleitung der Platte durch Wärmestrahlung zu dem Raum hin, und zwar über die große gesamte Fläche der Decke, die mit solchen Plattenelementen belegt ist. Durch die gleichmäßige Kühlung der gesamten Decke kann ein angenehmes, kühles Raumklima, frei von Zugluft, erreicht werden.

Versuche haben gezeigt, dass solche Plattenelemente schnell auf veränderte Temperaturen in dem Deckenhohlraum ansprechen, so dass sich erwünschte, veränderte Temperaturen in dem Raum schneller als mit üblichen Plattenelementen einstellen werden.

Versuche haben auch gezeigt, dass der Grafit in dem Kernkörper des Plattenelements nur in einer Menge von 10 bis 20 Gewichts-% vorhanden sein sollte, damit zum einen die guten Schallabsorptionseigenschaften der Plattenelemente nicht beeinträchtigt werden, zum anderen aber die Wärmeleitfähigkeit optimal eingestellt wird. Falls Grafit in Mengen unterhalb von etwa 10 Gewichts-% in das Plattenelement eingebracht wird, wird die Wärmeleitfähigkeit des Plattenelements gegenüber einem Plattenelement, das kein Grafit enthält, aber ansonsten entsprechend aufgebaut ist, nicht wesentlich verändert. Bei Grafitmengen, die oberhalb von 20 Gewichts-% liegen, wird praktisch keine weitere wesentliche Veränderung der Wärmeleitfähigkeit beobachtet, allerdings werden die Schallabsorptionseigenschaften der Platte verschlechtert, Eine Erklärung hierfür könnte diejenige sein, dass Grafit in der Mischung des körnigen Füllmaterials der Platte nur in einer solchen Menge vorhanden sein sollte, dass sich eine gleichmäßige Verteilung des Grafits von der einen Seite des Plattenelements zu der anderen Seite des Plattenelements ergibt, die bevorzugt in einer im Wesentlichen zusammenhängenden Struktur gebildet sein sollte. Dann übernehmen die zusammenhängenden Grafitstrukturen unmittelbar die Wärmeleitung, während die Hohlräume in dem Kernkörper, die zwischen dem körnigen Füllmaterial verbleiben, die Funktionen der Schallabsorption übernehmen,

Um ein solches Plattenelement herzustellen, wird der Grafit in die Ausgangsmischung, die im Wesentlichen aus dem körnigen Füllmaterial und dem alkalischen, mineralischen Bindemittel besteht, eingebracht und intensiv mit diesen Bestandteilen vermischt, bevor das Plattenelement geformt und ausgehärtet wird. Es konnte festgestellt werden, dass eine gleichmäßige, homogene Mischung erhalten wird und der Grafit nicht dazu neigt, sich in bestimmten Bereichen der Platte abzusetzen oder verstärkt abzulagern.

In einer Ausführungsform wird der Grafit in den Kernkörper in Form von Grafitpulver mit einer Körnung von 100 - 500 µm eingebracht. Dieses Grafitpulver lagert sich an dem körnigen Füllmaterial an. Falls dieses Grafitpulver in ausreichender Menge zur Verfügung gestellt wird, kann beobachtet werden, dass das Grafitpulver im Wesentlichen vollständig die Körner des körnigen Füllmaterials umhüllt. Unter Umständen muss darauf geachtet werden, dass im Anfangsstadium der Mischung zunächst nur das Bindemittel zu dem körnigen Füllmaterial zugegeben wird, um zunächst zu gewährleisten, dass eine homogene Mischung zwischen dem körnigen Füllmaterial und dem Bindemittel entsteht. Erst im Anschluss daran wird die erforderliche Menge an Grafit, in Form von Pulver und/oder Granulat, hinzugegeben und gemischt.

Alternativ, oder auch zusätzlich, zu dem vorstehend beschriebenen Grafitpulver kann der Grafit in Form von Grafitgranulat mit einer Körnung mit Körnungsfraktionen von 1 - 4 mm in dem Kernkörper eingelagert werden. Das Grafitgranulat hat den Vorteil, dass es, entsprechend in der Körnungsgröße angepasst, dem körnigen Füllmaterial entspricht, so dass auch durch das Grafitgranulat die für die Schallabsorption wichtigen Hohlräume in dem Kernkörper nicht wesentlich verändert werden. Gleichzeitig dient aber dieses Grafitgranulat der Verbesserung der Wärmeleitung der Platten mit den positiven Effekten, die bereits vorstehend beschrieben wurden.

Als körniges Füllmaterial wird bevorzugt ein mineralisches Granulat verwendet, das eine Körnung mit Kömungsfraktionen von 1 - 4 mm aufweist. Darüber hinaus sollte bei einem solchen Füllmaterial der Anteil der Körnungsfraktionen mit 1 - 2 mm 20 bis 40 % betragen, während der Anteil der Körnungsfraktionen mit 2 - 4 mm 60 bis 80 % betragen sollte,

Sehr gute Ergebnisse wurden insbesondere mit körnigem Füllmaterial erhalten, bei dem die Körnungsfraktionen mit 1 - 2 mm etwa 30 % betragen und der Anteil der Körnungsfraktionen mit 2 - 4 mm etwa 70 % beträgt. Mit diesen Kömungsverteilungen ergeben sich Strukturen, die ein ausgewogenes Verhältnis zwischen Bindemittel, dem eingelagerten Grafit, den Hohlräumen und der Festigkeit der Plattenelemente zeigen. Diese Eigenschaften können sogar bei großflächigen Plattenelementen erreicht werden, die Dimensionen von bis zu 250 cm x 125 cm haben und nur 18 - 20 mm dick sind.

Bevorzug wird das körnige Füllmaterial aus einem mineralischen Material gebildet, wobei sich als körniges Füllmaterial besonders gut Glasgranulat, vorzugsweise Blähglasgranulat, erwiesen hat.

Falls der Grafit in Form von Grafitgranulat in den Kernkörper eingebracht werden soll, sollte Grafitgranulat mit einer Kornfraktion von 1 - 4 mm oder Blähgrafit verwendet werden. Blähgrafit zeigt ein sehr gutes Verhältnis zwischen Volumen und Gewicht, das bedeutet mit Blähgrafit kann ein großes Volumen gefüllt werden, ohne dass das Gewicht des Plattenelements zu stark durch den Anteil des Grafits erhöht wird.

Je nach der Menge des Grafits, der in den Kernkörper eingebracht wird, und in Abhängigkeit davon, ob der Grafit als Pulver oder Granulat eingebracht wird, das Gewicht des Plattenelements gegenüber einem Plattenelement ohne Grafit nur um etwa 5 -10 % erhöht. Durch diese geringe Gewichtserhöhung können die bisher verwendeten Unterkonstruktionen, die zum Befestigen der Plattenelemente beispielsweise in Gebäuden eingesetzt werden, unverändert verwendet werden. Auch ist es möglich, bestehende Plattenelemente mit Schallabsorptionseigenschaften gegen diese neuartigen Plattenelemente einfach auszutauschen, ohne in die vorhandenen Aufhängungskonstruktionen eingreifen zu müssen.

Vorzugsweise wird als alkalisches, mineralisches Bindemittel ein Wasserglas eingesetzt. Mit Wasserglas können die vorstehend beschriebenen homogenen Mischungen des körnigen Füllmaterials sowie des Grafits erhalten werden. Weiterhin führt Wasserglas zu einer hohen Festigkeit des körnigen Verbunds, verleiht aber dem ausgehärteten Plattenelement dennoch die erforderliche Elastizität und Beständigkeit, um den sich ändernden Temperaturbedingungen und häufigen Temperaturwechselzyklen Stand zu halten, die gerade bei Kühldecken auftreten. Dies ist insbesondere auch unter dem Aspekt der Fall, dass durch diese Plattenelemente ein hoher Wärmetransport von der einen Seite zu der anderen Seite erfolgt.

Um die Wärmeleitfähigkeit des Plattenelements auf einen hohen Wert einzustellen, sollte der Grafit in Form von Grafitpulver und in einer solchen Menge eingesetzt werden, dass das körnige Füllmaterial im Wesentlichen vollständig durch den Grafit umhüllt wird. Dieser Aufbau kann auch dadurch verbessert werden, dass der Grafit in dem Kernkörper eine netzartige Struktur bildet, die von der einen Plattenseite zu der anderen Plattenseite verläuft.

Aus verschiedenen Gründen kann der Kernkörper zumindest auf dessen Sichtseite mit einer Deckschicht aus einem Vlies versehen werden. Mit diesem Vlies kann die Oberflächenstruktur des Plattenelements den am Einsatzort geforderten Bedingungen angepasst werden, die Festigkeit des Plattenelements kann verbessert werden und darüber hinaus kann ein solches Vlies auch so angepasst werden, dass die Schallabsorptionseigenschaften noch verbessert werden.

Um den Wärmetransport durch das Plattenelement von der einen Seite zu der anderen Seite zu beschleunigen, sollten die Plattenelemente möglichst dünn ausgebildet werden, wobei die Dicke der Plattenelemente vorzugsweise im Bereich von 18 - 20 mm liegt. Falls insbesondere bei geforderten Dicken der Plattenelemente, die unterhalb von diesem Bereich liegen, die Festigkeit des Plattenelements zu gering sein könnte, wird der Kernkörper durch Metallteile verstärkt, die bevorzugt in den Kernkörper eingebettet werden.

Als Metallteile können Metallschienen verwendet werden. Falls solche Metallschlenen zusätzlich perforiert sind, kann ein fester Verbund zwischen dem Material des Kemkörpers und den Metallschienen erreicht werden, da sich dann Füllmaterial und Bindemittel in den Perforationen verankern können.

Nachfolgend wird ein Ausführungsbeispiel eines Plattenelements mit Schallabsorptionseigenschaften beschrieben.

### BEISPIEL:

| | |
|---|---|
| Spezifikationen des hergestellten Plattenelements: | Länge 2,5 m |
| | Breite 1,25 m |
| | Plattendicke 18,0 mm |

| Ausgangsmischung zur Herstellung des Plattenelements: | |
|---|---|
| Blähglasgranulat | 65 Gewichts-% der nassen Mischung |
| alkalisches, mineralisches Bindemittel | 21 Gewichts-% der nassen Mischung |
| Grafitpulver | 12 Gewichts-% der nassen Mischung |
| Rest: Zuschlagsstoffe | 2 Gewichts-% der nassen Mischung |

Das Blähglasgranulat wies eine Körnung mit 1 - 4 mm auf, wobei die Verteilung wie folgt war:
1 - 2 mm = 30 %
2 - 4 mm = 70 %

Flächengewicht des fertig gestellten Plattenelements mit einer zusätzlichen Vliesschicht auf der Sichtseite der Platte: 8,2 kg/m²

### VERGLEICHSBEISPIEL:

Als Vergleichsbeispiel wurde ein Plattenelement mit denselben Spezifikationen wie das vorstehende Beispiel, allerdings ohne Grafitpulver, hergestellt. Der Gewichtsanteil des Grafitpulvers wurde dabei durch die entsprechende Erhöhung der Anteile des Blähglasgranulats sowie des mineralischen Bindemittels ersetzt.

Das Flächengewicht dieses fertig gestellten Plattenelements betrug 7,5 kg/m².

Für beide Plattenelemente wurde die Wärmeleitfähigkeit in absoluten Werten ermittelt. Hierzu wurden die Plattenelemente zum einen von der einen Seite aufgeheizt und die Temperaturänderung in Abhängigkeit der Zeit auf der anderen Seite ermittelt. Andererseits wurde der gleiche Versuch unter Kühlung der einen Seite des Plattenelements und Ermitteln der zeitabhängigen Temperaturänderung auf der anderen Seite des Plattenelements durchgeführt.

Die Versuche zeigen, dass sich die Temperaturen wesentlich schneller bei dem Plattenelement mit Grafitanteilen gegenüber dem Plattenelement ohne Grafitanteile ändern. Auch zeigte sich, dass das Plattenelement ohne Grafitanteile wesentlich träger auf Temperaturänderungen anspricht.

In den beigefügten Zeichnungen sind schematisch Querschnitte von Plattenelementen dargestellt, wobei
- Figur 1: ein Plattenelement mit körnigem Füllmaterial und eingelagertem Grafitpulver zeigt, und
- Figur 2: ein Plattenelement mit körnigem Füllmaterial und eingelagertem, körnigem Grafitgranulat zeigt.

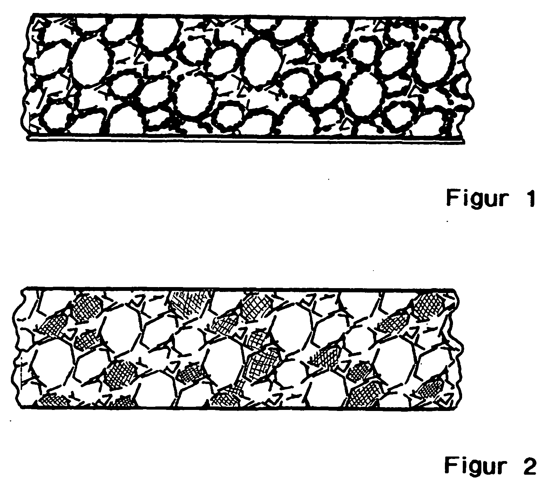

Das Plattenelement, das im Querschnitt in Figur 1 gezeigt ist, umfasst einen Kernkörper, der aus einem körnigen Füllmaterial aufgebaut ist, das durch ein alkalisches, mineralisches Bindemittel gebunden ist. Die Körner des körnigen Füllmaterials sind durch Grafit umhüllt, das in der nassen Ausgangsmischung in Form von Grafitpulver mit einer Körnung von 100 - 500 µm zugeschlagen wurde. Es ist zu erkennen, dass sich durch die Grafitumhüllung der Körner des körnigen Füllmaterials eine netzartige Grafit-Struktur von der einen Seite des Plattenelements zu der anderen Seite des Plattenelements ergibt, die wesentlich die Wärmeleitfähigkeit des Plattenelements bestimmt. Zusätzlich ist das Plattenelement auf der Unterseite mit einer Vliesschicht belegt.

In dem Plattenelement, das im Querschnitt in Figur 2 gezeigt ist, sind in die Struktur des Kernkörpers aus dem körnigen Füllmaterial Grafitkörner (aus Blähgrafit) eingelagert. Der Anteil der Grafitkörner ist so gewählt, dass zusammenhängende Strukturen aus aneinander gelagerten Grafitkörnern gebildet werden, die zu einer guten Wärmeleitfähigkeit des Plattenelements führen.

## Patentansprüche

1. Plattenelement mit Schallabsorptionseigenschaften,
das einen Kernkörper aufweist, der als Hauptkomponente ein körniges Füllmaterial umfasst, das mit einem alkalischen, mineralischen Bindemittel gebundenen ist,
**dadurch gekennzeichnet,**
**dass** der Kernkörper Grafit in einer Menge von 10 - 20 Gewichts-% bezogen auf die nasse Ausgangsmischung enthält.

2. Plattenelement nach Anspruch 1, **dadurch gekennzeichnet, dass** der Grafit ein Grafitpulver mit einer Körnung von 100 - 500 µm ist.

3. Plattenelement nach Anspruch 1, **dadurch gekennzeichnet, dass** der Grafit ein Grafitgranulat mit einer Körnung mit Körnungsfraktionen von 1 - 4 mm aufweist.

4. Plattenelement nach einem der Ansprüche 1 bis 3, **dadurch gekennzeichnet, dass** das körnige Füllmaterial durch ein mineralisches Granulat gebildet ist, das eine Körnung mit Körnungsfraktionen von 1 - 4 mm aufweist.

5. Plattenelement nach Anspruch 4, **dadurch gekennzeichnet, dass** der Anteil der Körnungsfraktionen mit 1 - 2 mm 20 bis 40 % beträgt und der Anteil der Körnungsfraktionen mit 2 - 4 mm 60 bis 80 % beträgt.

6. Plattenelement nach Anspruch 5, **dadurch gekennzeichnet, dass** der Anteil der Körnungsfraktionen mit 1 - 2 mm etwa 30 % beträgt und der Anteil der Körnungsfraktionen mit 2 - 4 mm etwa 70 % beträgt.

7. Plattenelement nach einem der Ansprüche 1 bis 6, **dadurch gekennzeichnet, dass** das körnige Füllmaterial aus einem mineralischen Material gebildet ist.

8. Plattenelement nach Anspruch 7, **dadurch gekennzeichnet, dass** das körnige Füllmaterial aus Glasgranulat gebildet ist.

9. Plattenelement nach Anspruch 8, **dadurch gekennzeichnet, dass** das körnige Füllmaterial aus Blähglasgranulat gebildet ist.

10. Plattenelement nach Anspruch 3, **dadurch gekennzeichnet, dass** das Grafitgranulat aus Blähgrafit gebildet ist.

11. Plattenelement nach einem der Ansprüche 1 bis 10, **dadurch gekennzeichnet, dass** das alkalische, mineralische Bindemittel Wasserglas ist.

12. Plattenelement nach einem der Ansprüche 1 bis 11, **dadurch gekennzeichnet, dass** das körnige Füllmaterial im Wesentlichen vollständig durch den Grafit umhüllt ist.

13. Plattenelement nach einem der Ansprüche 1 bis 12, **dadurch gekennzeichnet, dass** der Grafit in dem Kernkörper eine netzartige Struktur bildet, die von der einen Plattenseite zu der anderen Plattenseite verläuft.

14. Plattenelement nach einem der Ansprüche 1 bis 13, **dadurch gekennzeichnet, dass** der Kernkörper zumindest auf dessen Sichtseite eine Deckschicht aus einem Vlies aufweist.

## Claims

1. A panel element with sound absorbing characteristics,
which comprises a core body which as the main component comprises a granular filling material which is bonded with an alkaline mineral binder
**characterized in**
**that** the core body contains graphite in an amount of 10-20 wt.% based on the wet starting mixture.

2. The panel element according to claim 1, **characterized in that** the graphite is a graphite powder having a grain size of 100-500 µm.

3. The panel element according to claim 1, **characterized in that** the graphite comprises a graphite granulate having a grain size with grain size fractions of 1-4 mm.

4. The panel element according to any one of claims 1 to 3, **characterized in that** the granular filling material is formed by a mineral granulate having a grain size with grain size fractions of 1-4 mm.

5. The panel element according to claim 4, **characterized in that** the proportion of the grain size fractions with 1-2 mm is 20-40% and the proportion of the grain size fractions with 2-4 mm is 60-80%.

6. The panel element according to claim 5, **characterized in that** the proportion of the grain size fractions with 1-2 mm is about 30% and the proportion of the grain size fractions with 2-4 mm is about 70%.

7. The panel element according to any one of claims 1 to 6, **characterized in that** the granular filling material is formed of a mineral material.

8. The panel element according to claim 7, **characterized in that** the granular filling material is formed of glass granulate.

9. The panel element according to claim 8, **characterized in that** the granular filling material is formed of expanded glass granulate.

10. The panel element according to claim 3, characterized that the graphite granulate is formed of expanded graphite.

11. The panel element according to any one of claims 1 to 10, **characterized in that** the alkaline mineral binder is sodium silicate.

12. The panel element according to any one of claims 1 to 11, **characterized in that** the granular filling material is substantially completely enclosed by the graphite.

13. The panel element according to any one of claims 1 to 12, **characterized in that** the graphite in the core body forms a netlike structure which extends from the one panel side to the other panel side.

14. The panel element according to any one of claims 1 to 13, **characterized in that** the core body at least on its visible side comprises a cover layer of a nonwoven material.

## Revendications

1. Elément de panneau présentant des propriétés d'absorption acoustique,
présentant un corps formant âme centrale, qui renferme en tant que composant principal, un matériau de charge en grains, lié par un liant minéral alcalin,
**caractérisé**
**en ce que** le corps formant âme centrale contient du graphite selon une quantité de 10-20 % en poids rapporté au mélange initial humide.

2. Elément de panneau selon la revendication 1, **caractérisé en ce que** le graphite et une poudre de graphite d'une granulométrie de 100-500 µm.

3. Elément de panneau selon la revendication 1, **caractérisé en ce que** le graphite est un granulat de graphite avec une granulométrie comprenant des fractions granulométriques de 1-4 mm.

4. Elément de panneau selon l'une des revendications 1 à 3, **caractérisé en ce que** le matériau de charge en grains est formé par un granulat minéral, qui présente une granulométrie comprenant des fractions granulométriques de 1-4 mm.

5. Elément de panneau selon la revendication 4, **caractérisé en ce que** la proportion des fractions granulométriques de 1-2 mm vaut 20 à 40%, et la proportion des fractions granulométriques de 2-4 mm vaut de 60 à 80%.

6. Elément de panneau selon la revendication 5, **caractérisé en ce que** la proportion des fractions granulométriques de 1-2 mm vaut environ 30%, et la proportion des fractions granulométriques de 2-4 mm vaut environ 70%.

7. Elément de panneau selon l'une des revendications 1 à 6, **caractérisé en ce que** le matériau de charge en grains est formé par un matériau minéral.

8. Elément de panneau selon la revendication 7, **caractérisé en ce que** le matériau de charge en grains est formé par un granulat de verre.

9. Elément de panneau selon la revendication 8, **caractérisé en ce que** le matériau de charge en grains est formé par un granulat de verre expansé.

10. Elément de panneau selon la revendication 3, **caractérisé en ce que** le granulat de graphite est formé de graphité expansé.

11. Elément de panneau selon l'une des revendications 1 à 10, **caractérisé en ce que** le liant minéral alcalin est du verre soluble.

12. Elément de panneau selon l'une des revendications 1 à 11, **caractérisé en ce que** le matériau de charge en grains est sensiblement entièrement enveloppé par le graphite.

13. Elément de panneau selon l'une des revendications 1 à 12, **caractérisé en ce que** le graphite dans le corps formant âme centrale forme une structure du type en réseau, qui s'étend d'un côté du panneau à l'autre côté du panneau.

14. Elément de panneau selon l'une des revendications 1 à 13, **caractérisé en ce que** le corps formant âme centrale présente, au moins sur son côté visible, une couche de recouvrement en un non tissé.
